(19) **Europäisches Patentamt / European Patent Office / Office européen des brevets**

(11) **EP 4 579 291 A1**

(12) **EUROPEAN PATENT APPLICATION**
published in accordance with Art. 153(4) EPC

(43) Date of publication:
**02.07.2025  Bulletin 2025/27**

(21) Application number: **23857057.6**

(22) Date of filing: **21.07.2023**

(51) International Patent Classification (IPC):
**G02B 5/30** (2006.01)

(52) Cooperative Patent Classification (CPC):
**G02B 5/30**

(86) International application number:
**PCT/JP2023/026757**

(87) International publication number:
**WO 2024/042941 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.08.2022  JP 2022135199**

(71) Applicants:
• **National Institute of Advanced Industrial
Science and Technology
Chiyoda-ku
Tokyo 100-8921 (JP)**
• **Sumitomo Bakelite Co.Ltd.
Shinagawa-ku
Tokyo 140-0002 (JP)**

(72) Inventors:
• **HOKARI Ryohei
Tsukuba-shi, Ibaraki 305-8560 (JP)**
• **KURIHARA Kazuma
Tsukuba-shi, Ibaraki 305-8560 (JP)**
• **TAKAKUWA Kyohei
Tokyo 101-0054 (JP)**
• **KINO Keisuke
Tokyo 101-0054 (JP)**
• **HIRAMOTO Kazuhiro
Tokyo 101-0054 (JP)**
• **INABA Hironari
Tokyo 140-0002 (JP)**
• **SHIOMOTO kengo
Tokyo 140-0002 (JP)**
• **SATO Tatsushi
Tokyo 140-0002 (JP)**

(74) Representative: **Nederlandsch Octrooibureau
P.O. Box 29720
2502 LS The Hague (NL)**

(54) **WIRE GRID TYPE POLARIZING ELEMENT AND MANUFACTURING METHOD THEREOF**

(57)    Provided are a wire grid polarizing element having an excellent polarization degree and a high polarized light transmittance in a perpendicular direction, and a method for producing the same. The wire grid polarizing element includes: a substrate that is molded such that a transparent sheet surface has a continuous corrugated shape in cross-section; and a conductor layer that covers a conductor protrusion portion and a surface portion excluding a tip portion having a corrugated shape, the conductor protrusion portion protruding from the tip portion in a tip direction continuous to a direction perpendicular to an arrangement direction. A period (a) of the corrugated shape is 100 to 400 nm, an average depth (b) from the convex portion tip portion to a valley portion of a concave portion in the corrugated shape is 200 to 600 nm, an average occupancy ($[2d/a] \times 100$) of the conductor layers represented by a ratio of an average width (d) in the arrangement direction of two conductor layers present in one period to the period (a) is 18 to 40%, and an average thickness (h) in the tip direction of the conductor protrusion portion is 1.5 times or more the average width (d) of the conductor layers.

Processed by Luminess, 75001 PARIS (FR)

EP 4 579 291 A1

# Fig. 1

(1)

(2)

(3)

## Description

### Technical Field

The present invention relates to a wire grid polarizing element that can be applied to the field of optical products such as a display, a camera, sunglasses, or an optical measuring instrument using an electromagnetic wave such as visible light or near infrared light, and a method for producing the same.

### Background Art

The wire grid polarizing element includes a layer where wire-shaped objects made of metal or the like are arranged on a substrate in a striped pattern at a specific period and uses the following characteristic: when the period is sufficiently smaller than a wavelength of an incident electromagnetic wave (light), light of an electric field component parallel to the wire-shaped objects is reflected or absorbed, and transmission of light of an electric field component perpendicular to the wire-shaped objects is allowed. This wire grid polarizing element is advantageous in that it has excellent optical characteristics capable of exhibiting a polarization function in a wide wavelength range of visible light to near infrared light and high durability.

Patent Literature 1 discloses a wire grid polarizer where a fine metallic wire is formed on an underlayer with an oblique deposition method using a vacuum deposition method and a method for producing the same, the underlayer being made of a metal oxide layer that is formed on the entire surface of top portions of ridges of a transparent substrate having an uneven structure and side surfaces thereof, and the fine metallic wire being made of a metal layer present in 70% or more of the area of at least the top portions of the ridges and further the side surfaces of the ridges.

Patent Literature 2 discloses a wire grid polarizing element having excellent polarization characteristics that is obtained by causing particles to be incident on an uneven structure surface of a grid structure layer on a transparent substrate having a one-dimensional lattice-shaped uneven structure from an oblique direction using a dry process such as sputtering or vacuum deposition to form an Al-Si alloy layer having a Si content of 0.05 to 1.5 wt% on a convex portion of the uneven structure, and a method for producing the same.

Patent Literature 3 discloses an optical functional body including a filling layer that is formed by filling a concave portion of a substrate having a fine uneven pattern with particles having a smaller particle size than a width of the concave portion of the uneven pattern using an electroless plating method, and a method for producing the same. In general, it is known that, in the wire-grid polarizing plate, the transmittance increases by reducing the width of a conductive wire with respect to the period, and shielding performance of the light of the electric field component parallel to the wire is improved by increasing the thickness of the conductive wire (Non-Patent Literature 1). Therefore, Patent Literature 3 also discloses that the wire grid polarizing element can be inexpensively prepared by using a nanoimprinting method for forming the uneven structure.

Patent Literature 4 discloses a polarization separation element made of a triangular-wave shaped metal thin film, in which the metal thin film has periodicity in one direction and is uniform in the other direction among two directions orthogonal to each other, a cross-sectional shape taken along the one direction is continuously repeated at a given period of a wavelength or less, and when the period is represented by $\Lambda$, a depth of a groove having triangular-wave shape in cross-section is represented by h, a thickness of the metal thin film in a depth direction of the groove having triangular-wave shape in cross-section is represented by d, and a minimum wavelength in an used wavelength range is represented by $\lambda$min, a condition of

$$\Lambda/\lambda min < 0.5, \ h > 1.5\Lambda, \ d > 0.010 \ \mu m$$

is satisfied.

That is, regarding the shape of the metal thin film, Patent Literature 4 discloses the upper limit of the period $\Lambda$ and the lower limits of the depth h of the groove and the thickness d of the metal thin film.

### Citation List

### Patent Literatures

Patent Literature 1: Japanese Patent No. 5459210
Patent Literature 2: Japanese Patent Application Laid-Open No. 2009-204894

Patent Literature 3: Japanese Patent No. 6042642
Patent Literature 4: Japanese Patent No. 4650931

**Non-Patent Literature**

Non-Patent Literature 1: Low-reflective wire grid polarizers with an absorptive layer formed by glancing angle deposition, Journal of Institute of Image Information and Television Engineers, Vol. 65, No. 10, pp. 1440-1445 (2011)

**Summary of Invention**

**Technical Problem**

In the invention disclosed in Patent Literature 1, when the fine metallic wire made of the metal layer is formed on the top portions of the ridges of the substrate and the side surfaces thereof using the deposition method, formation of fine metal particles caused by crystallization of the metal material is suppressed, and the underlayer made of the metal oxide layer is provided to prevent a decrease in the transmittance of incident light of the polarizing element. In addition, to form the metal layer on at least a part of the side surfaces of the ridges using the oblique deposition method, there is a limitation in that the value of the height of the ridge from a bottom surface of the concave portion to a tip of a convex portion in the uneven shape cannot increase. For example, in all of Examples 1 to 11 corresponding to Examples in the specification of Patent Literature 1, the height of the ridges is about 100 nm. Accordingly, to improve the polarization degree, the thickness of the metal layer formed on the convex top portion also increases. Therefore, there is a limitation on the uneven structure to be formed on the substrate.

An object of the invention disclosed in Patent Literature 2 is to solve the problem that, when pure aluminum (Al) is used as a metal forming a wire grid, pure Al particles formed in the convex portion of the substrate through the dry process cannot be refined such that polarization characteristics cannot be obtained as designed. To solve the problem, by using an Al-Si alloy having a Si content of 0.05 to 1.5 wt% as the metal for forming the wire grid, the particles formed in the convex portion are refined to improve the polarization characteristics. However, the application of this invention disclosed in Patent Literature 2 is limited to a case where an Al-based metal as a metal for forming a wire grid is formed on a substrate through a dry process.

In the wire-grid polarizing plate prepared using the electroless plating method described in Patent Literature 3, the polarization degree does not reach about 90%. To increase the polarization degree while maintaining the transmittance, the aspect ratio (ratio between the thickness and the width) of the concave portion filled with the conductor needs to be increased. In this case, a mold used for providing the uneven shape on the substrate may break or the uneven structure may collapse. Therefore, the aspect ratio is increased, there is a limitation in practice.

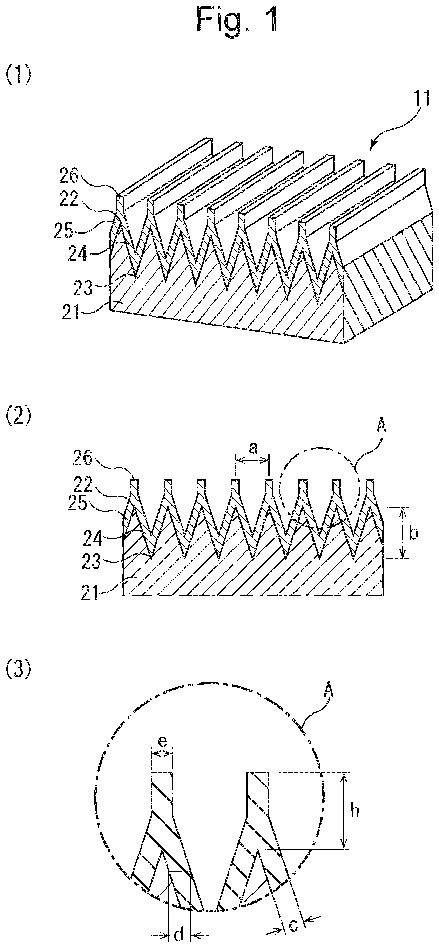

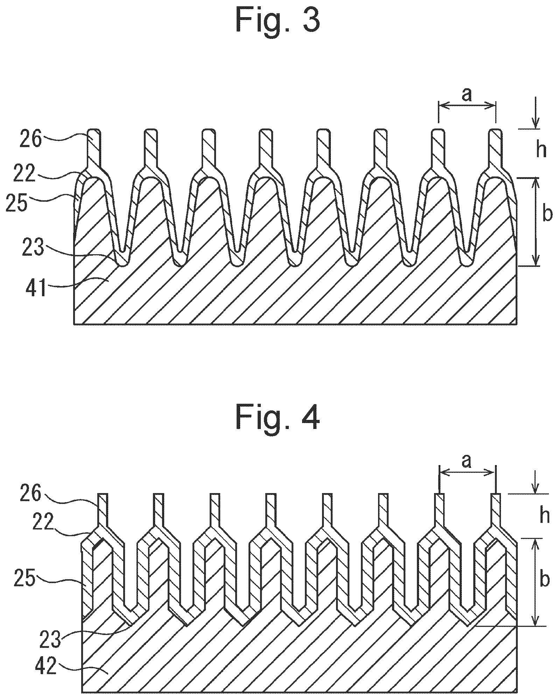

Patent Literature 4 discloses that a polarization function is exhibited in the structure made of the metal thin film having a triangular-wave shape in cross-section. However, regarding the identification of the shape of the metal thin film, Patent Literature 4 merely discloses the upper limit value of the period with respect to the used wavelength range, the lower limit value of the height of the triangular-wave shape with respect to the period, and the lower limit value of the thickness of the metal thin film. Figures 1 and 3 of Examples in the document discloses a metal thin film where the period is 0.12 $\mu$m, the height (h) is 0.30 $\mu$m, and the thickness (d) in the depth direction is 0.03 $\mu$m. However, the thickness in the direction perpendicular to the metal thin film surface is relatively small, and the width of the metal thin film in the periodic direction with respect to the period is small. Therefore, regarding the polarization characteristics, the used wavelength range is 0.40 to 0.70 $\mu$m, reflected S polarization is about 70 to 75%, and transmitted P polarization is about 60 to 80%. Accordingly, to obtain a structure having a high polarization degree, further investigation is necessary.

In addition, as a method for preparing the metal thin film, a method of laminating the metal thin film on a transparent substrate or a method of removing the transparent substrate from the metal thin film laminated on the transparent substrate to support the metal thin film on a rectangular frame or the like is disclosed. However, it is not easy to produce a triangular-wave shaped thin film having a large amplitude, and a tip portion of the thin film may break, and it may also be practically difficult to remove the substrate from the metal thin film laminated on the substrate.

In all of the above-described patent literatures, a wire grid polarizing element having a high transmittance and an excellent polarization degree where a conductor layer made of various conductive materials is disposed on a substrate having a shape that can be stably produced, and a method for producing the same are not known. The present invention has been made in consideration of the above-described points, and an object thereof is to provide a wire grid polarizing element having a high polarization degree and a high single transmittance (luminous transmittance with respect to polarized light in a direction perpendicular to incident light that can be inexpensively and stably prepared, and a method for producing the same.

**Solution to Problem**

In consideration of the technology in the related art, the present inventors found that a wire grid polarizing element having the following configuration maintains an excellent polarization degree and a high light transmittance, the wire grid polarizing element including: a substrate where a transparent sheet surface has a continuous corrugated shape in a cross-sectional shape taken along an arrangement direction of an uneven pattern and a period and a depth from a convex portion tip portion to a valley portion of a concave portion in the uneven pattern are in specific ranges; and a conductor layer that is formed on a surface of the substrate and covers a surface portion excluding the convex portion tip portion in the uneven pattern, in which a ratio of a width in the arrangement direction of two conductor layers present in one period to the period, that is, an occupancy of the conductor layers is in a specific range, and an average thickness of the conductor protrusion portion provided in the convex portion tip portion of the uneven pattern is given times or more the width in the arrangement direction of the conductor layers.

In addition, the present inventors found that, even when a generic conductor formation method is used, the above-described wire grid polarizing element can be relatively easily produced without requiring a step of partially removing a conductor. Based on this finding, the present invention has been completed.

That is, the present invention is summarized as the following (1) to (8) inventions.

(1) A wire grid polarizing element including:

a substrate where an uneven pattern having periodicity is formed on a transparent sheet surface and a cross-sectional shape of the uneven pattern taken along an arrangement direction of the uneven pattern is a continuous corrugated shape; and
a conductor layer that is disposed on the surface of the substrate and covers a conductor protrusion portion and a surface portion excluding each of convex portion tip portions, the conductor protrusion portion being formed to further protrude from the convex portion tip portion in a tip direction, and the convex portion tip portion being formed to extend in a longitudinal direction in the uneven pattern,
in which a period (a) of the uneven pattern of the substrate surface is 100 to 400 nm,
an average depth (b) from the convex portion tip portion to a valley portion of a concave portion in the uneven pattern of the substrate surface is 200 to 600 nm,
an average occupancy ($[2d/a] \times 100$) of the conductor layers represented by a ratio of an average width (d) in the arrangement direction of two conductor layers present in one period to the period (a) is 18 to 40%, and
an average thickness (h) in the tip direction of the conductor protrusion portion provided in the convex portion tip portion of the uneven pattern is 1.5 times or more the average width (d) in the arrangement direction of the conductor layers.

(2) The wire grid polarizing element according to (1),
in which the average thickness (h) in the tip direction of the conductor protrusion portion provided in the convex portion tip portion of the uneven pattern of the substrate surface is 1.5 times or more and 5 times or less the average width (d) in the arrangement direction of the conductor layers.
(3) The wire grid polarizing element according to (1) or (2),
in which the average width (d) in the arrangement direction of the conductor layers that are disposed on the surface portion excluding the convex portion tip portion in the uneven pattern of the substrate surface is 14 to 70 nm.
(4) The wire grid polarizing element according to any one of (1) to (3),
in which the continuous corrugated shape in the cross-sectional shape taken along the arrangement direction that is formed on the substrate surface is a triangular-wave shape made of a continuous shape of a substantially isosceles triangle.
(5) The wire grid polarizing element according to any one of (1) to (4),
in which the cross-sectional shape in the arrangement direction of the conductor protrusion portion that is provided on the convex portion tip portion of the uneven pattern of the substrate surface and protrudes in the tip direction is a substantially rectangular shape, a tapered shape, a reverse tapered shape, or a substantially vertical elliptical shape.
(6) The wire grid polarizing element according to any one of (1) to (5),
in which a conductor material for forming the conductor protrusion portion and the conductor layer is one or two or more kinds selected from aluminum, gold, silver, copper, platinum, molybdenum, nickel, chromium, titanium, tungsten, tantalum, zirconium, iron, niobium, hafnium, cobalt, palladium, bismuth, and neodymium, or an alloy made of two or more kinds of these metals.
(7) A method for producing a wire grid polarizing element including:

forming a conductor layer on a surface of a substrate where an uneven pattern having periodicity is formed on a transparent sheet surface and a cross-sectional shape of the uneven pattern taken along an arrangement direction of the uneven pattern is a continuous corrugated shape,

the conductor layer covering a conductor protrusion portion and a surface portion excluding each of convex portion tip portions, the conductor protrusion portion being formed to further protrude from the convex portion tip portion in a tip direction, and the convex portion tip portion being formed to extend in a longitudinal direction in the uneven pattern,

in which a period (a) of the uneven pattern of the substrate surface is 100 to 400 nm, and an average depth (b) from the convex portion tip portion to a valley portion of a concave portion in the uneven pattern of the substrate surface is 200 to 600 nm,

the conductor layer and the conductor protrusion portion are formed on the substrate surface with a physical deposition method of introducing a deposition material from above in a direction perpendicular to the substrate surface or with an electroless plating method of performing catalyst addition and activation using a liquid containing tin ions ($Sn^{2+}$) and a liquid containing palladium ions ($Pd^{2+}$) as a pretreatment and subsequently performing electroless plating,

an average occupancy ($[2d/a] \times 100$) of the conductor layers represented by a ratio of an average width (d) in the arrangement direction of two conductor layers present in one period to the period (a) is 18 to 40%, and

an average thickness (h) in the tip direction of the conductor protrusion portion provided in the convex portion tip portion of the uneven pattern is 1.5 times or more the average width (d) in the arrangement direction of the conductor layers.

(8) The method for producing a wire grid polarizing element according to (7),
in which the physical deposition method is any one of a vacuum deposition method, an electron beam deposition method, or a sputtering method.

**Advantageous Effect of Invention**

In the wire grid polarizing element according to the present invention, the substrate has a shape where the period (a) of the uneven pattern having a corrugated shape on the surface and the average depth (b) from the convex portion tip portion to the valley portion of the concave portion are fixed, and regarding the conductor disposed on the substrate surface, the ratio (2d/a) between the period (a) and the average width (d) of the conductor layers excluding the convex portion tip portion are in the fixed range. As a result, the polarization degree can be improved.

In addition, the ratio (h/d) of the thickness (h) in the tip direction of the conductor protrusion portion provided in the convex portion tip portion to the average width (d) of the conductor layers is fixed. As a result, the polarization degree can be further improved, and a necessary light transmittance can be maintained.

In addition, as compared to the structure where the cross-sectional shape of uneven structure is a rectangular shape, in the polarizing element according to the present invention using a corrugated shape as the uneven structure, the width gradually changes in the thickness direction even in the structure having the same depth (thickness). Therefore, structure breakage caused by the peeling of the conductor layer is not likely to occur, and a wire grid polarizing element having excellent environment resistance, bendability, and elasticity can be easily obtained by selecting a material used for the substrate sheet.

In the method for producing the wire grid polarizing element according to the present invention having a corrugated shape in cross-section, a molding method such as film insert molding, cast molding, or injection molding can be used for molding the substrate. Therefore, a three-dimensional curved molded product from which a specific polarization component can be extracted can also be realized. In addition, when the conductor is disposed on the substrate where the corrugated structure is formed on the surface, a generic film forming facility for a general physical deposition method such as vacuum deposition method, an electron beam deposition method, or sputtering and for an electroless plating method or the like can be used. Therefore, by combining these steps, commercial production is relatively easy, and market expansion such as the application to an optical member can be expected. In addition, void-like defects are not likely to occur even in a posttreatment step such as hard coating.

**Brief Description of Drawings**

[Figure 1] Figure 1 is a conceptual diagram illustrating one example of a wire grid polarizing element according to the present invention, in which (1) is a perspective view, (2) is a cross-sectional view, and (3) is an enlarged view of an A portion in (2).

[Figure 2] Figure 2 is a conceptual diagram illustrating conductor occupancies in three cross-sections of the wire grid polarizing element according to the present invention, in which (1) is a longitudinal sectional view illustrating positions of the three cross-sections, (2) is a cross-section taken along line B-B, (3) is a cross-sectional view taken alone line C-C, and (4) is a cross-sectional view taken along line D-D.

[Figure 3] Figure 3 is a conceptual diagram illustrating a cross-section of another example of the wire grid polarizing element according to the present invention.

[Figure 4] Figure 4 is a conceptual diagram illustrating a cross-section of another example of the wire grid polarizing element according to the present invention.

[Figure 5] Figure 5 is a conceptual diagram illustrating a cross-section of an example where an underlayer is provided in the wire grid polarizing element according to the present invention.

[Figure 6] Figure 6 is a conceptual diagram illustrating a cross-section of an example where a coating layer is provided in the wire grid polarizing element according to the present invention.

[Figure 7] Figure 7 is a cross-sectional view schematically illustrating an example of steps (1) to (4) of producing the wire grid polarizing element according to the present invention.

[Figure 8] Figure 8 is an image (SEM image) obtained by observing a cross-section of a mold prepared in Example 1 with a scanning electron microscope (SEM).

[Figure 9] Figure 9 is an SEM image of a cross-section of a polarizing element test piece of the present invention prepared in Example 1-1.

[Figure 10] Figure 10 is an SEM image of a cross-section of a polarizing element test piece of the present invention prepared in Example 3.

[Figure 11] Figure 11 is an SEM image of a cross-section of a polarizing element test piece of the present invention prepared in Example 4-2.

[Figure 12] Figure 12 illustrate cross-sectional views of models of polarizing elements where cross-sections are (1) a rectangular shape, (2) a trapezoidal shape, and (3) a triangular-wave shape that are referred to in numerical calculation of optical characteristics in Reference Example 1 and Reference Example 2.

[Figure 13] Figure 13 is a graph illustrating numerical calculation results of optical characteristics of the polarizing element in Reference Example 1.

[Figure 14] Figure 14 is a model diagram used for numerical calculation of optical characteristics in each of triangular-wave shaped polarizing elements (1), (2), and (3) in Reference Example 3.

[Figure 15] Figure 15 is an SEM image illustrating a cross-section of a mold prepared in Comparative Example 1.

[Figure 16] Figure 16 is an SEM image illustrating a cross-section of a polarizing element test piece prepared in Comparative Example 1.

**Description of Embodiments**

Regarding the present invention, (1) a wire grid polarizing element and (2) a method for producing a wire grid polarizing element will be described below in detail.

(1) Wire Grid Polarizing Element

Each of elements forming the wire grid polarizing element according to the present invention and a structure thereof will be described.

In the wire grid polarizing element according to the present invention, the shape of a conductor may be a shape other than a so-called "wire shape". In the pertinent technical field, even when a metal reflector does not have a wire shape, the term "wire grid polarizing element" is used, and thus the term wire grid polarizing element is used.

Hereinafter, an embodiment of the wire grid polarizing element according to the present invention will be described using the drawings.

Figure 1(1) is a perspective view illustrating one example of a wire grid polarizing element 11 according to the present invention where a conductor layer 25 and a conductor protrusion portion 26 are formed on a surface of a substrate 21, Figure 1(2) is a cross-sectional view taken along an arrangement direction of an uneven pattern, and Figure 1(3) is a partially enlarged view of an A portion of Figure 1(2).

Representations illustrated in Figures 1(2) and 1(3) including a period (a) of the uneven pattern in the substrate 21, a depth (b) from a convex portion tip portion 22 to a valley portion of the concave portion 23, an average thickness (c) in a direction perpendicular to a surface of the conductor layer 25 in the wire grid polarizing element 11, an average width (d) in an arrangement direction of the conductor layers 25, an average width (e) of the conductor protrusion portion 26 provided in the convex portion tip portion 22, and an average thickness (h) in a tip direction of the conductor protrusion portion 26 are commonly used in other embodiments.

[Substrate]

As illustrated in Figure 1, the substrate 21 configuring the wire grid polarizing element according to the present invention is molded such that a transparent sheet surface has a continuous corrugated shape in a cross-section taken along the arrangement direction of the uneven pattern having periodicity, in which a period (a) of the uneven pattern of the corrugated shape of the substrate 21 surface is 100 to 400 nm, and an average depth (b) from the convex portion tip portion 22 to a valley portion of a concave portion 23 in the uneven pattern is 200 to 600 nm.

As illustrated in Figures 1(1) and 1(2), the convex portion tip portion 22 and the concave portion 23 are provided on the surface side of the substrate 21. In this corrugated shape, a slope shape with respect to a direction in which light is incident from above in a direction perpendicular to the substrate surface is formed. Therefore, as described below, when the conductor layer is formed on the substrate surface having this shape, the improvement of the polarization degree can be expected. A specific example of the corrugated shape is preferably a triangular-wave shape made of a substantially isosceles triangle where the corrugated shape portion of the substrate 21 is continuous as illustrated in Figure 1(2).

On the other hand, when the corrugated shape is a bullet shape or a sine-wave shape as illustrated in a substrate 41 in Figure 3 or is a shape, such as a countersunk screw shape having no screw thread, where the corrugated shape portion of the substrate is parallel in a depth direction in a part of the uneven structure as illustrated in a substrate 42 in Figure 4, the effects of the present invention can be expected to be exhibited. In addition, cross-sectional shapes of two slope portions present in one period between the convex portion and the concave portion do not need to be uniform, in which one cross-sectional shape may be a triangular-wave shape, and the other cross-sectional shape may be a sine-wave shape.

An average period (a) of the uneven pattern that is formed on the substrate surface may be less than or equal to a wavelength of an incident electromagnetic wave that is generally targeted. Therefore, mainly when a visible range is targeted, the average period (a) of the polarizing element according to the present invention is selected from a range of 100 to 400 nm and is preferably 100 to 200 nm.

The depth (b) of the uneven pattern of the substrate surface, that is, the depth (b) from the convex portion tip portion 22 to the valley portion of the concave portion 23 also varies depending on physical property values of a material of the conductor as illustrated in Figure 1(2), but may be 0.1 times or more and is preferably about 0.5 to 1 time the wavelength of the target electromagnetic wave from the viewpoints of easy preparation, durability, and the like of the substrate. In consideration of the improvement of the polarization degree, the depth (b) of the uneven pattern is selected from a range of 200 to 600 nm.

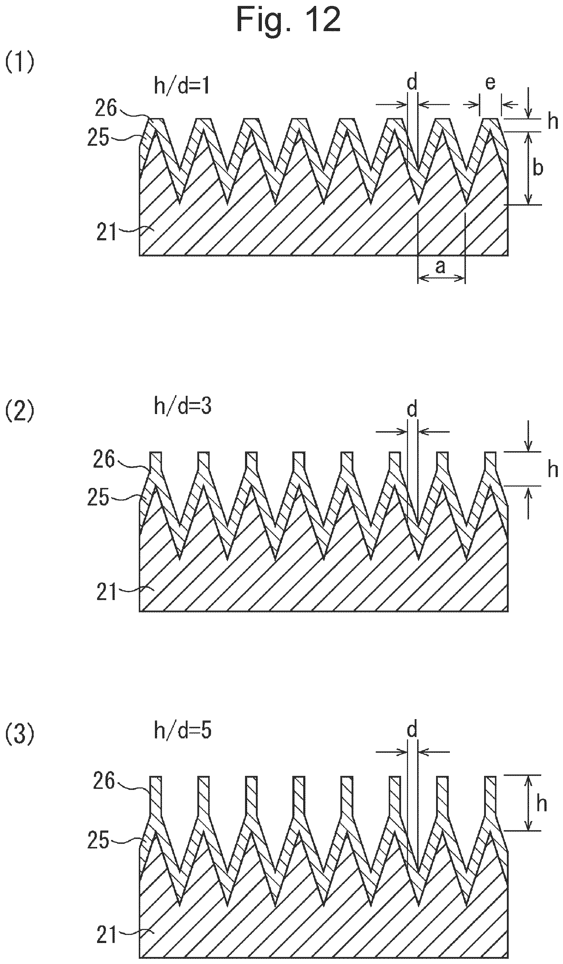

In Reference Example 2 described below, by using numerical calculation by rigorous coupled-wave analysis for a geometric model of Figure 12(1), a change in optical characteristics (a polarization degree and a single transmittance (luminous transmittance of polarized light in a direction perpendicular to incident light)) when the depth (b) of the uneven structure was increased in a range of 200 nm to 1000 nm was calculated. As a result, it was also verified from the numerical calculation that, as the depth (b) increases, the polarization degree is improved as illustrated in Table 4. From the viewpoints of moldability during the preparation of the substrate, mechanical strength as the polarizing element, and the like, the depth (b) is preferably 600 nm or less.

The substrate 21 used in the wire grid polarizing element according to the present invention may be a material that is transparent with respect to an electromagnetic wave having a target wavelength in a visible range, an infrared range, or the like, and examples thereof include: an amorphous thermoplastic resin such as a polymethyl methacrylate resin, a polycarbonate resin, a polystyrene resin, a cycloolefin polymer resin, a crosslinked polyethylene resin, a polyvinyl chloride resin, a polyarylate resin, a polyphenylene ether resin, a modified polyphenylene ether resin, a polyether imide resin, a polyether sulfone resin, a polysulfone resin, or a polyether ketone resin; a crystalline thermoplastic resin such as a polyethylene terephthalate resin, a polyethylene naphthalate resin, a polyethylene resin, a polypropylene resin, a polybutylene terephthalate resin, an aromatic polyester resin, a polyacetal resin, or a polyamide resin; an ultraviolet curable resin or thermosetting resin such as an acrylic resin, an epoxy resin, or an urethane resin; an organic substrate such as a triacetate resin; and an inorganic substrate such as glass, silicon, quartz, or a ceramic material. In addition, this substrate is preferably a single-layer structure in an expansion and contraction step such as bending, and may have a multilayer structure.

[Wire Grid Polarizing Element]

As illustrated in Figure 1, in the wire grid polarizing element 11 according to the present invention, the conductor layer 25 is provided on the surface of the substrate 21 having the above-described corrugated shape in cross-section, the conductor layer 25 covering the conductor protrusion portion 26 and a surface portion excluding each of convex portion tip portions 22, the conductor protrusion portion 26 being formed to further protrude from the convex portion tip portion 22 in a tip direction, and the convex portion tip portion 22 being formed to extend in a longitudinal direction in the uneven pattern. An average occupancy ([2d/a] $\times$ 100) of the conductor layers 25 represented by a ratio of an average width (d) in the arrangement direction of two conductor layers 25 present in one period to the period (a) is 18 to 40%, and an average thickness (h) in the tip direction of the conductor protrusion portion 26 provided in the convex portion tip portion 22 is 1.5 times or more the average width (d) in the periodic direction of the conductor layers.

In Reference Example 1 described below, referring to geometric models of polarizing elements illustrated in Figures 12(1) to 12(3), numerical calculation by rigorous coupled-wave analysis was performed for a change in optical characteristics when the displacement (s) in shape was increased. When the cross-section illustrated in Figure 12(1) is a rectangular shape, the displacement (s) is 0 nm, as the displacement (s) increases, the cross-section illustrated in Figure 12(2) has a trapezoidal shape, and as the displacement (s) further increases, the cross-section illustrated in Figure 12(3) is a triangular-wave shape and the displacement (s) is 70 nm. It was verified from the numerical calculation that, as the displacement (s) increases, the single transmittance is improved as illustrated in Table 3.

It is preferable that the conductor layer 25 that is provided to cover the substrate surface excluding the convex portion tip portion 22 of the uneven pattern is basically formed with a substantially uniform thickness. The conductor layer 25 may be formed such that the thickness on the convex portion tip portion 22 side is more than the thickness on the concave portion 23 side, the conductor layer 25 may be formed such that the thickness on the convex portion tip portion 22 side is less than the thickness on the concave portion 23 side, or the conductor layer 25 may be formed such that the film thickness varies to some extent.

The average width (d) in the arrangement direction of the conductor layers 25 or the average thickness (c) in the direction perpendicular to the surface illustrated in Figure 1(3) can be selected from a range of about 0.005 times to 0.4 times the period (a) in each of the layers in a traveling direction of the electromagnetic wave, that is, in a direction in which the electromagnetic wave travels from the convex portion tip portion 22 side toward the concave portion 23 side in the uneven structure. When the incident light is in a wavelength range of visible light to near infrared light, the average width (d) in the arrangement direction of the conductor layers 25 is desirably selected from a range of 14 to 70 nm in consideration of the improvement of the polarization degree. The above-described structure of the wire grid polarizing element can be used in the same magnification range even for an electromagnetic wave in a wavelength range other than a visible range, for example, an ultraviolet range, a near infrared range, an infrared range, a terahertz range, or a microwave range.

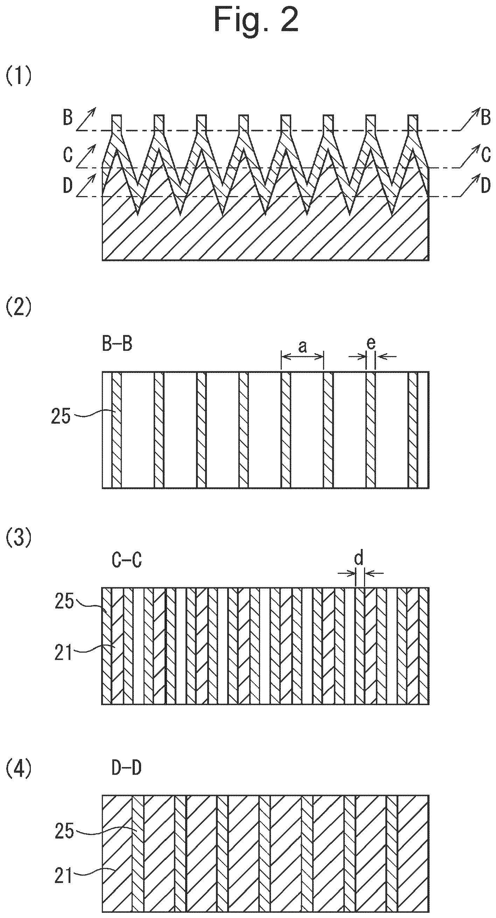

In the wire grid polarizing element according to the present invention, two conductor layers are present in a region illustrated in Figure 2(3) in one period of the uneven pattern having the corrugated shape. The average occupancy ([2d/a] × 100) of the conductor layers represented by the ratio of the average width (d) in the arrangement direction of the two conductor layers to the period (a) of the uneven pattern of the corrugated shape is selected from a range of 18 to 40% in consideration of the improvement of the polarization degree.

In addition, in Reference Example 1 described below, by using numerical calculation by rigorous coupled-wave analysis for the geometric model of Figure 12(1), a change in optical characteristics when the average thickness (c) in the direction perpendicular to the surface of the conductor layer 25 increased was calculated. In this case, it was verified that, when the average thickness (c) was increased from 5 nm to 10 nm or 15 nm, the polarization degree tends to be improved as illustrated in Table 3.

The wire grid polarizing element according to the present invention is characterized in that the conductor layer 25 and the conductor protrusion portion 26 are provided on the substrate that is molded to have a continuous corrugated shape in a cross-section taken along the arrangement direction of the uneven pattern, the conductor layer 25 covering a substrate surface portion 24 excluding the convex portion tip portion in the uneven pattern, and the conductor protrusion portion 26 protruding from the convex portion tip portion 22 of the uneven pattern in the tip direction continuous to a direction perpendicular to the arrangement direction. The shape of the conductor protrusion portion 26 is not particularly limited, and examples of the cross-sectional shape of the arrangement direction include a substantially rectangular shape, a tapered shape, a reverse tapered shape, and a substantially vertical elliptical shape. Among these, a substantially rectangular shape is preferable.

In addition, in consideration of the improvement of the polarization degree, the average thickness (h) in the tip direction of the conductor protrusion portion 26 provided in the convex portion tip portion 22 of the uneven pattern of the substrate 21 is 1.5 times or more and preferably 1.5 to 5.0 times the average width (d) in the arrangement direction of the conductor layer 25.

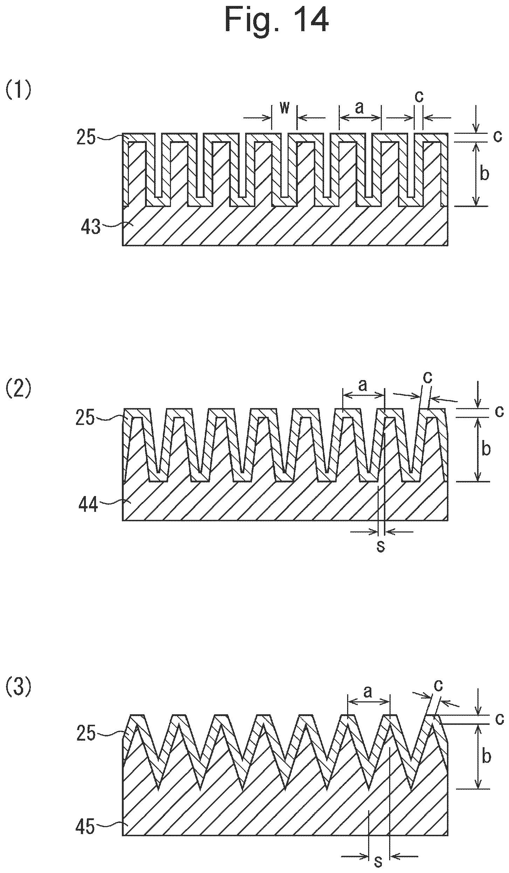

In Reference Example 3 described below, by using rigorous coupled-wave analysis for geometric models of Figures 14(1) to 14(3), numerical calculation was performed for a change in optical characteristics when the average thickness (h) in the tip direction of the conductor protrusion portion 26 was increased. As a result, it was verified from the numerical calculation that, as a ratio (h/d) of the average thickness (h) in the tip direction of the conductor protrusion portion 26 to the average width (d) increases from 1 to 10, the polarization degree tends to be improved as illustrated in Table 5.

In addition, the average width (e) of the conductor protrusion portion 26 is preferably 0.005 times to 0.4 times the period (a).

The material of the conductor used in the present invention may be any material that functions as a conductor in the wavelength range to be used, and specific examples thereof include one or two or more kinds selected from aluminum, gold, silver, copper, platinum, molybdenum, nickel, chromium, titanium, tungsten, tantalum, zirconium, iron, niobium, hafnium, cobalt, palladium, bismuth, and neodymium, or an alloy made of two or more kinds of these metals. Not only the metal but also a semiconductor can be used.

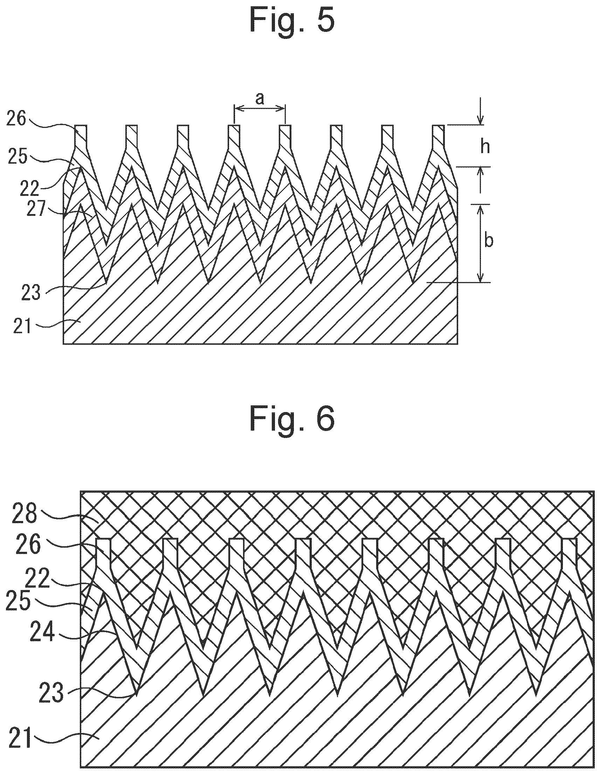

In addition, when the conductor is formed on the substrate 21, as illustrated in Figure 5, an underlayer 27 made of a metal oxide such as silicon oxide, titanium oxide, hafnium oxide, or aluminum oxide can be formed in advance. Further, after forming the conductor layer 25 and the conductor protrusion portion 26 on the substrate 21, as illustrated in Figure 6, a coating layer 28 made of a transparent member of an organic material or an inorganic material can be formed. In this case, the concave portion of the uneven pattern may be or may not be embedded with the coating layer 28.

In the wire grid polarizing element 11 according to the present invention, the conductor layer 25 is formed along the uneven pattern of the corrugated shape of the substrate surface 21. Therefore, relatively high adhesiveness with the substrate can be obtained. Therefore, due to expansion and contraction caused by a temperature change or the like, the conductor is likely to peel off, heat resistance is excellent, and bending resistance is also excellent. As a result, the present invention can also be expected to be applied not only to optical systems for optical products such as various displays or cameras or optical systems for optical measurement but also to polarized sunglasses, smart glasses, or the like.

(2) Method for Producing Wire Grid Polarizing Element

According to the present invention, there is provided a method for producing a wire grid polarizing element including: forming a conductor layer on a surface of a substrate where an uneven pattern having periodicity is formed on a transparent sheet surface and a cross-sectional shape of the uneven pattern taken along an arrangement direction of the uneven pattern is a continuous corrugated shape,

the conductor layer covering a conductor protrusion portion and a surface portion excluding each of convex portion tip portions, the conductor protrusion portion being formed to further protrude from the convex portion tip portion in a tip direction, and the convex portion tip portion being formed to extend in a longitudinal direction in the uneven pattern, in which a period (a) of the uneven pattern of the substrate surface is 100 to 400 nm, and an average depth (b) from the convex portion tip portion to a valley portion of a concave portion in the uneven pattern of the substrate surface is 200 to 600 nm,

the conductor layer and the conductor protrusion portion are formed on the substrate surface with a physical deposition method of introducing a deposition material from above in a direction perpendicular to the substrate surface or with an electroless plating method of performing a catalyst addition treatment using stannous chloride and palladium chloride as a pretreatment,

an average occupancy ([2d/a] $\times$ 100) of the conductor layers represented by a ratio of an average width (d) in the arrangement direction of two conductor layers present in one period to the period (a) is 18 to 40%, and

an average thickness (h) in the tip direction of the conductor protrusion portion provided in the convex portion tip portion of the uneven pattern is 1.5 times or more the average width (d) in the arrangement direction of the conductor layers.

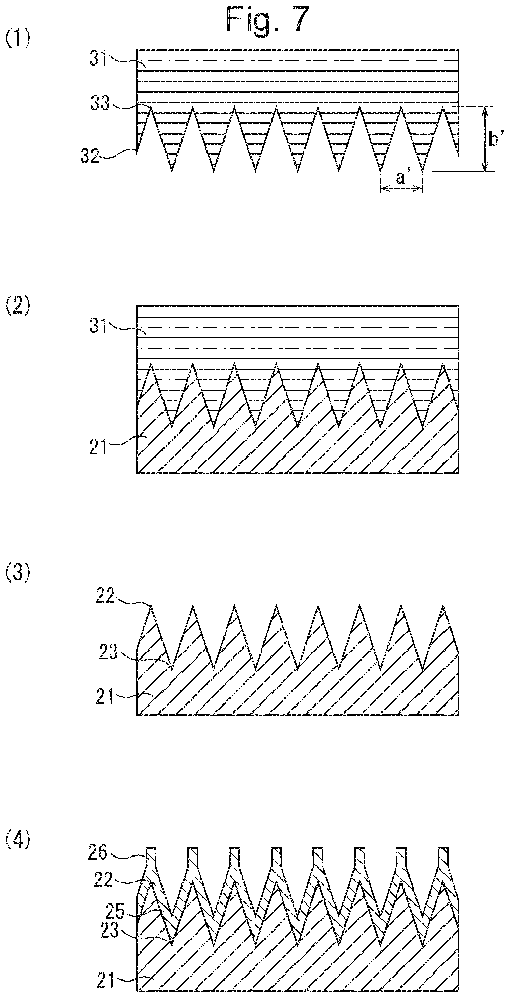

An example of the method for producing the wire grid polarizing element according to the present invention will be described using Figures 7(1) to 7(4). The production method according to the present invention is not limited to the following production example.

Examples of the production method include a method including: a step (first step: Figure 7(1)) of preparing a mold 31 having a corrugated shape in cross-section that includes a convex portion 32 of the mold and a concave portion 33 of the mold to form the substrate 21; a step (second step: Figure 7(2)) of performing thermal nanoimprinting (hot embossing) or photo nanoimprinting on a transparent sheet using the mold 31; a step (third step: Figure 7(3)) of forming the substrate 21 where a cross-section including the convex portion tip portion 22 and the concave portion 23 has a corrugated shape; and a step (fourth step: Figure 7(4)) of forming the conductor layer 25 and the conductor protrusion portion 26 on the surface of the substrate 21 having a corrugated shape in cross-section that includes the convex portion tip portion 22 and the concave portion 23.

In the production method according to the present invention, basically, the wire grid polarizing element according to the present invention having a corrugated shape in cross-section can be obtained in the third step and the fourth step, and means for forming the substrate 21 having a corrugated shape in cross-section in the first step and the second step is not particularly limited. In Figure 7, representations including a period (a') and an average depth (b') of the corrugated structure of the mold 31 are commonly used in other embodiments.

As means for preparing the mold 31 illustrated in Figure 7(1) that includes the concave portion 33 of the mold and the convex portion 32 of the mold corresponding to the convex portion tip portion 22 and the concave portion 23 of the substrate 21, respectively, and has the period (a') and the depth (b') from a tip of the convex portion 32 of the mold to a valley portion of the concave portion 33 of the mold in the first step, for example, an exposure technology such as electron beam lithography, a focused ion beam, or interference exposure, a self-organization technology using nanoparticles, or dry etching or wet etching is preferably used, and the mold 31 may be prepared by transfer from a master mold prepared using this means. The mold 31 is not limited to the mold where the structure having an uneven shape or the like in cross-section is formed on a plane, and a structure having a corrugated shape in cross-section may be formed on a curved-shaped surface. The material of the mold 31 is preferably silicon, but may be glass such as quartz, a ceramic such as alumina and silicon carbide, or a metal such as nickel and stainless steel, or may be a multilayer material in which a metal, a semiconductor, or a dielectric is deposited on the above-described material. In addition, to improve mold releasability in nanoimprinting or injection molding, it is preferable that a fluorine-based mold releasing agent or a low friction inorganic film is formed on the surface of the mold 31. Depending on the mold material to be used and the resin material to be molded, a silicon-based mold releasing agent can also be used.

In the second step, as illustrated in Figure 7(2), it is preferable that the transfer is performed by thermal nanoimprinting (hot embossing) or photo nanoimprinting. On the other hand, a molding method such as injection molding or cast molding can also be adopted, and it is more preferable to adopt injection molding in consideration of operability, quality stability, and economic efficiency.

In the third step, it is preferable that the substrate 21 illustrated in Figure 7(3) having a corrugated shape in cross-section that includes the convex portion tip portion 22 and the concave portion 23 is prepared through the first step and the second step. To prepare the substrate 21, an exposure technology such as electron beam lithography, a focused ion beam, or interference exposure, a self-organization technology using nanoparticles, an etching technology, or the like can also be used. In addition, the substrate 21 is not limited to a single-layer structure and may have a multilayer structure, and the corrugated structure portion can also be made of a material different from the material of the substrate 21.

In the fourth step, as means for forming the conductor on the substrate 21 illustrated in Figure 7(4), a physical deposition method such as vacuum deposition, an electron beam deposition method, or sputtering, a chemical deposition method, an atomic layer deposition method, or a method including a combination of the methods, or an electroless plating method can be used.

As the deposition method, the physical deposition method (front deposition method) of introducing the deposition material from above in the direction perpendicular to the substrate surface is preferably adopted.

In addition, as a specific example of the electroless plating method, it is preferable that (i) degreasing and cleaning using a surfactant and an alkaline aqueous solution are performed to remove contamination of the surface, (ii) after etching with an aqueous solution of an inorganic acid such as chromic acid, sulfuric acid, or hydrochloric acid to improve adhesiveness, a neutralization treatment is performed in this order, and (iii) subsequently, the substrate surface is dipped in a liquid containing tin ions ($Sn^{2+}$) and a liquid containing palladium ions ($Pd^{2+}$) as a pretreatment for performing activation of a chemical plating reaction. Specifically, for example, a sensitizer-activator process in which an operation of dipping the substrate surface to be chemically plated in the liquid containing tin ions ($Sn^{2+}$) and then dipping the substrate surface in the liquid of containing palladium ions ($Pd^{2+}$) is performed once or twice, or a catalyser-accelerator process in which a palladium colloid liquid is prepared by mixing the liquid containing tin ions ($Sn^{2+}$) and the liquid containing palladium ions ($Pd^{2+}$), the substrate surface is dipped in the palladium colloid liquid, and the substrate surface is dipped in a hydrochloric acid solution to accelerate the chemical plating reaction can be used. (iv) Next, electroless plating is performed using an electroless plating liquid.

The conductor layer 25 and the conductor protrusion portion 26 are formed on the surface of the substrate 21 that is molded to have a continuous corrugated shape in a cross-section taken along the arrangement direction of the uneven pattern, the conductor layer 25 covering the surface portion 24 excluding the convex portion tip portion 22 in the uneven pattern, and the conductor protrusion portion 26 protruding from the convex portion tip portion 22 of the uneven pattern in the tip direction (the direction perpendicular to the arrangement direction). At this time, in the physical deposition method, the average width (d) in the arrangement direction of the conductor layers and the thickness (h) in the tip direction of the conductor protrusion portion 26 can be controlled based on an irradiation time, a voltage, a vacuum degree, a distance between a target and the substrate surface, and the like. In addition, in the electroless plating method, the average width (d) and the thickness (h) can be controlled based on a plating treatment time, a plating liquid temperature, a component concentration in the plating liquid, a stirring control of the plating liquid, and the like.

In addition, after forming the conductor layer 25 and the conductor protrusion portion 26 on the substrate 21, the shape of the conductor can also be controlled by dry etching or wet etching with an Ar ion beam or the like.

When the conductor is formed on the substrate 21, as illustrated in Figure 5, an underlayer 27 made of a metal oxide such as silicon oxide, titanium oxide, hafnium oxide, or aluminum oxide can be formed in advance. Further, after forming the conductor layer 25 and the conductor protrusion portion 26 on the substrate 21, as illustrated in Figure 6, the coating layer 28 can also be formed. In this case, the coating material is not limited to a colorless transparent material, and a transparent material having a tint, for example, a dye containing a pigment or the like can also be used. The concave portion of the uneven pattern may be or may not be embedded with the coating layer 28.

The description "a period (a) of the uneven pattern of the corrugated shape is 100 to 400 nm, and an average depth (b) from the convex portion tip portion to a valley portion of a concave portion in the uneven pattern of the substrate surface is 200 to 600 nm" in the step of molding the substrate, and the description "an average occupancy ($[2d/a] \times 100$) of

the conductor layers represented by a ratio of an average width (d) in the arrangement direction of two conductor layers present in one period to the period (a) is 18 to 40%, and an average thickness (h) in the tip direction of the conductor protrusion portion protruding from the convex portion tip portion of the uneven pattern in the tip direction is 1.5 times or more the average width (d) in the arrangement direction of the conductor layers" in the step of forming the conductor on the substrate are as described above regarding the wire grid polarizing element, and thus the description thereof will not be repeated herein.

Examples

The present invention will be described in detail using Examples, Comparative Examples, and Reference Examples below. The present invention is not limited to Examples below.

A polarization degree and a light transmittance of a prepared test piece were measured using the following device.

A spectrophotometer (model: SolidSpec-3700) manufactured by Shimadzu Corporation was used. In polarizing elements that were prepared in Examples and the like and had a corrugated shape in a cross-section taken along an arrangement direction of an uneven pattern, incident light of an electric field component vibrating in directions parallel or perpendicular to a depth direction when seen from the cross-section was a target to be measured.

Polarization characteristics were evaluated based on the polarization degree. When a luminous transmittance with respect to polarized light in the direction parallel to the arrangement direction of the uneven pattern is represented by Tp and a luminous transmittance (single transmittance) with respect to polarized light in the direction perpendicular to the arrangement direction of the uneven pattern is represented by Tv, a polarization degree V is represented by the following formula.

$$V\ (\%) = [(Tv - Tp)/(Tv + Tp)]^{1/2} \times 100$$

The luminous transmittance with respect to each of the polarization components can be obtained from a transmittance (transmittance spectrum) for each of wavelengths 380 to 780 nm (every 1 nm) and a visibility curve. Likewise, when a transmittance with respect to polarized light in the parallel direction is represented by Tp0 and a transmittance with respect to polarized light in the perpendicular direction is represented by Tv0, a polarization degree V0 at one wavelength is as follows.

$$V0 = [Tv0 - Tp0)/(Tv0 + Tp0]^{1/2} \times 100$$

(Example 1 and Comparative Example 1)

In Examples 1-1 and 2 and Comparative Example 1, the uneven pattern of the corrugated shape was transferred to a transparent sheet surface made of a thermoplastic resin with a thermal nanoimprinting method using a mold to prepare a substrate. Next, an aluminum layer was formed on the substrate surface having the uneven pattern with a vacuum deposition method to prepare a polarizing element test piece. Regarding the prepared test piece, polarization characteristics were evaluated.

(1) Preparation of Substrate

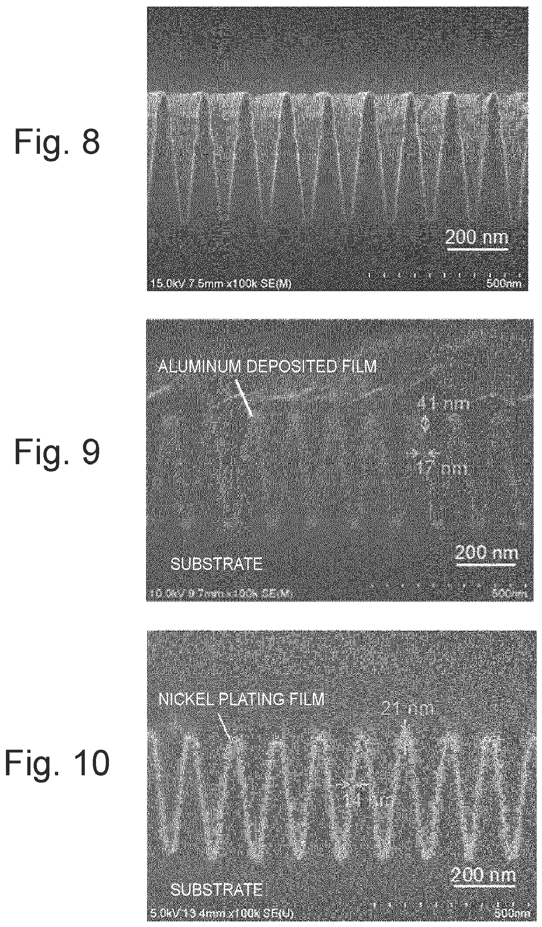

As the transparent sheet, a polycarbonate sheet (manufactured by Mitsubishi Gas Chemical Co., Inc., trade name: FE-2000, thickness: 300 μm) was used. The used mold was prepared by performing microfabrication on a 4-inch silicon wafer. The uneven cross-sectional shape of the corrugated shape of the fine structure of the used mold had a triangular-wave shape made of a substantially isosceles triangle where a period (a') as a wavelength of the wave was 140 nm, an average depth (b') of the wave was 426 nm, and the corrugated shape portion was continuous. An image (SEM image) obtained by imaging a substantial cross-section of the prepared mold with a scanning electron microscope (SEM) is illustrated in Figure 8. Using this mold, the uneven structure having a corrugated shape in the cross-section taken along the arrangement direction was transferred to the sheet surface using a thermal nanoimprinting method to prepare a substrate.

(2) Preparation of Polarizing Element Test Piece using Vacuum Deposition

Next, using an electron beam vacuum deposition device, the polarizing element test piece was fixed to a stage such that the substrate surface faced the front with respect to a deposition source (a fixing method that was performed in a general deposition method instead of an oblique deposition method). While rotating the stage, an aluminum layer was deposited on a surface excluding the convex portion tip portion in the uneven pattern, and aluminum was deposited on the convex portion tip portion such that the average thicknesses (h) in the tip direction of the conductor protrusion portions in Example 1-1, Example 1-2, and Comparative Example 1 were 41 nm, 80 nm, and 24 nm, respectively. As a result, three kinds of polarizing element test pieces were prepared.

The shape and the like of the prepared substrate and the polarizing element test piece are collectively illustrated in Table 1. In addition, an SEM image of a cross-section of the polarizing element test piece prepared in Example 1-1 is illustrated in Figure 9.

(3) Evaluation Result

Regarding the obtained polarizing element test piece, a polarization degree and a single transmittance were measured. These results are collectively illustrated in Table 1. In Examples 1-1 and 2, excellent results were obtained for both of the polarization degree and the single transmittance. In Example 1-2, the average width (d) in the arrangement direction of the aluminum layers was 26 nm, the average thickness (h) in the tip direction of the conductor protrusion portion was 80 nm, and thus, the ratio (h/d) between the average thickness (h) and the average width (d) of the protrusion portion was about 3.1. In addition, the period was 140 nm, and thus the average occupancy (2d/a) of the conductor layer was 37.1%.

In Example 1-2, optical characteristics were a polarization degree of 99% and a single transmittance of 37%.

In Comparative Example 1, the average width (d) in the arrangement direction of the conductor layers was 10 nm. Therefore, the average occupancy (2d/a) of the conductor layer was 14.3%, and the polarization degree was low at 45%.

(Example 2)

In Example 2, a substrate was prepared using the same method as the method of Example 1. Next, a chromium layer was formed on the substrate surface having the uneven pattern with a vacuum deposition method to prepare a polarizing element test piece, and polarization characteristics were evaluated.

(1) Preparation of Polarizing Element Test Piece

Using the same sheet and the same mold as the sheet and the mold used in Example 1, the uneven pattern having a corrugated shape in the cross-section taken along the arrangement direction was transferred to the sheet surface using a thermal nanoimprinting method to prepare a substrate.

Next, using the same electron beam vacuum deposition device as the device of Example 1, a chromium layer was formed on the substrate surface using the same method as the method described in Example 1 to prepare a polarizing element test piece. The shape and the like of the prepared substrate and the polarizing element test piece are collectively illustrated in Table 1.

(2) Evaluation Result

The average width (d) in the arrangement direction of the chromium layers formed on the substrate surface side was 25 nm, and the average thickness (h) in the tip direction of the conductor protrusion portion was 61 nm. Based on these values, the ratio (h/d) between the average thickness (h) and the average width (d) of the protrusion portion was 2.44, and the average occupancy (2d/a) of the conductor layer was 35.7%.

Regarding the obtained polarizing element test piece, a polarization degree and a single transmittance were measured. As a result, the polarization degree was 99%, the single transmittance was 33%, and excellent results were obtained for both of the polarization degree and the single transmittance.

(Example 3)

In Example 3, a substrate was prepared using the same method as the method of Example 1. Next, a nickel layer was formed on the substrate surface having the uneven pattern with an electroless plating method to prepare a polarizing element test piece, and polarization characteristics were evaluated.

(1) Preparation of Substrate

Using the same sheet and the same mold as the sheet and the mold used in Example 1, the uneven pattern having a corrugated shape in the cross-section taken along the arrangement direction was transferred to the sheet surface using a thermal nanoimprinting method to prepare a substrate.

(2) Formation of Conductor by Electroless Nickel Plating Method

Electroless plating was performed on the substrate surface using an electroless nickel-boron plating liquid (trade name: TOP CHEM ALLOY 66-LF) manufactured by Okuno Chemical Industries Co., Ltd. Degreasing and cleaning using a surfactant and an alkaline aqueous solution were performed in advance on the substrate surface to be electroless-plated as a pretreatment. Next, after etching with an aqueous solution of an inorganic acid, a neutralization treatment is performed in this order. Next, a treatment (sensitizer-activator process) of accelerating the chemical plating reaction using a liquid containing tin ions ($Sn^{2+}$) and a liquid containing palladium ions ($Pd^{2+}$) (both of which are manufactured by Okuno Chemical Industries Co., Ltd.) was performed as an activation pretreatment of the chemical plating reaction.
By performing plating with a plating liquid at room temperature (23°C) for 80 seconds and performing water cleaning and drying, a polarizing element test piece was prepared. The shape and the like of the prepared substrate and the polarizing element test piece are collectively illustrated in Table 1.

(3) Evaluation Result

Optical characteristics of the obtained test piece were a polarization degree of 99% and a single transmittance of 20%. In Example 3, an SEM image obtained by observing a substantial cross-section of the prepared polarizing element having a corrugated shape in cross-section is illustrated in Figure 10. It can be verified from the drawing that the conductor was formed with a substantially uniform thickness on the surface portion having a triangular-wave shape in cross-section. The depth from the convex portion tip portion to the valley portion of the concave portion in the formed triangular-wave shape was about 387 nm, and the average width (d) in the arrangement direction of the conductor layers was 14 nm. The average thickness (h) of the conductor protrusion portion was 21 nm, and the ratio (h/d) between the thickness (h) and the average width (d) of the conductor layers was about 1.5. At this time, the average occupancy of the conductor in each of the layers from the convex portion tip portion to the valley portion of the concave portion in the triangular-wave shape was about 20%, and the occupancy of the conductor in the all of the layers of the top portion and the bottom surface portion was 30% or less. As a result, it was verified that the polarizing element having a corrugated shape in cross-section that was prepared using an electroless plating method had a high polarization degree and a necessary light transmittance.

[Table 1]

| | | Example 1-1 | Example 1-2 | Comparative Example 1 | Example 2 | Example 3 |
|---|---|---|---|---|---|---|
| (1) Shape of Substrate | | | | | | |
| Period (a) | nm | 140 | 140 | 140 | 140 | 140 |
| Depth (b) from Convex Portion Tip Portion to Concave Portion Valley Portion | nm | 345 | 390 | 360 | 333 | 387 |
| (2) Conductor and Shape Thereof | | | | | | |
| Means for Forming Conductor | - | Vacuum Deposition | | | Vacuum Deposition | Electroless Plating |
| Material of Conductor | - | Aluminum | | | Chromium | Nickel |
| Average Width (d) in Arrangement Direction of Conductor Layers | nm | 17 | 26 | 10 | 25 | 14 |
| (2-1) Conductor Protrusion Portion | | | | | | |
| Average Thickness (h) of Conductor Protrusion Portion | nm | 41 | 80 | 24 | 61 | 21 |
| [h/d] | - | 2.4 | 3.1 | 2.4 | 2.44 | 1.5 |
| (2-2) Average Occupancy of Conductor Layers | | | | | | |
| Average Occupancy [(2d/a) $\times$ 100] | % | 24.3 | 37.1 | 14.3 | 35.7 | 20.0 |
| (3) Optical Characteristics | | | | | | |

(continued)

| (2-2) Average Occupancy of Conductor Layers | | | | | | |
|---|---|---|---|---|---|---|
| Polarization Degree | % | 94 | 99 | 45 | 99 | 99 |
| Single Transmittance | % | 46 | 37 | 73 | 33 | 20 |

(Example 4 and Comparative Examples 2 and 3)

In Example 4, a substrate was prepared using the same method as the method of Example 1. Next, each of an aluminum layer, silicon oxide, and an aluminum layer was formed on the substrate surface by sputtering to prepare a polarizing element test piece.

(1) Preparation of Polarizing Element Test Piece

Using the same sheet and the same mold as the sheet and the mold used in Example 1, the uneven pattern having a corrugated shape in the cross-section taken along the arrangement direction was transferred to the sheet surface using a thermal nanoimprinting method to prepare a substrate.

Next, in Comparative Example 2 and Examples 4-1 and 4-2, using a sputtering device, the substrate was fixed to a stage such that the substrate surface faced the front with respect to an aluminum target. While rotating the stage, an aluminum layer was formed on the substrate surface such that the average width (d) in the arrangement direction was as illustrated in Table 2. As a result, three kinds of polarizing element test pieces were prepared.

Next, in Comparative Example 3 and Examples 4-3 and 4-4, using the same sputtering device as the device of Examples 4-1 and 4-2, the substrate was fixed to a stage such that the substrate surface faced the front with respect to an aluminum target. While rotating the stage, a silicon oxide ($SiO_2$) layer was formed in advance on the surface such that the average thickness (f) in the perpendicular direction was 10 nm. Next, an aluminum layer was formed on the surface of the silicon oxide such that the average width (d) in the arrangement direction was as illustrated in Table 2. As a result, three kinds of polarizing element test pieces were prepared. The shape and the like of the prepared substrate and the polarizing element test piece are collectively illustrated in Table 2.

(2) Evaluation Result

Regarding the obtained polarizing element test piece obtained in each of Examples 4-1 to 4-4 and Comparative Examples 2 and 3, a polarization degree and a single transmittance were measured. The measurement results are collectively illustrated in Table 2.

In all of the polarizing element test pieces prepared in Examples 4-1 to 4-4, excellent results were obtained for both of the polarization degree and the single transmittance.

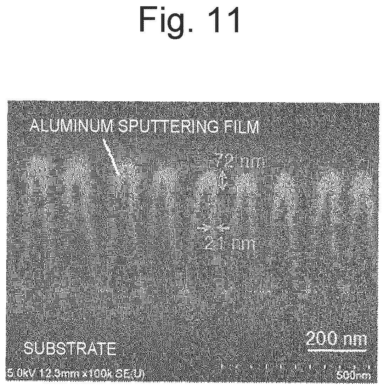

In the polarizing element test piece prepared in Example 4-2, the average thickness (h) of the conductor protrusion portion was about 72 nm, the average width (d) in the arrangement direction of the conductor layers was 21 nm, and the ratio (h/d) between the average thickness (h) of the conductor protrusion portion and the average width (d) in the arrangement direction of the conductor layers was about 3.4. An SEM image of a cross-section of the polarizing element test piece prepared in Example 4-2 is illustrated in Figure 11.

In all of Comparative Examples 2 and 3, the average width (d) in the arrangement direction of the conductor layers was 11 nm. Therefore, the average occupancy of the conductor was 15.7%, and thus the polarization degree was low at 89%.

(Comparative Example 4)

A fine concave structure where an uneven shape was a substantially continuous bullet shape was formed on a thermoplastic resin sheet surface with a thermal nanoimprinting method using a mold. Next, a nickel layer was formed on a surface including the concave portion using an electroless plating method to prepare a polarizing element test piece.

(1) Formation of Fine Concave Structure of Sheet Surface

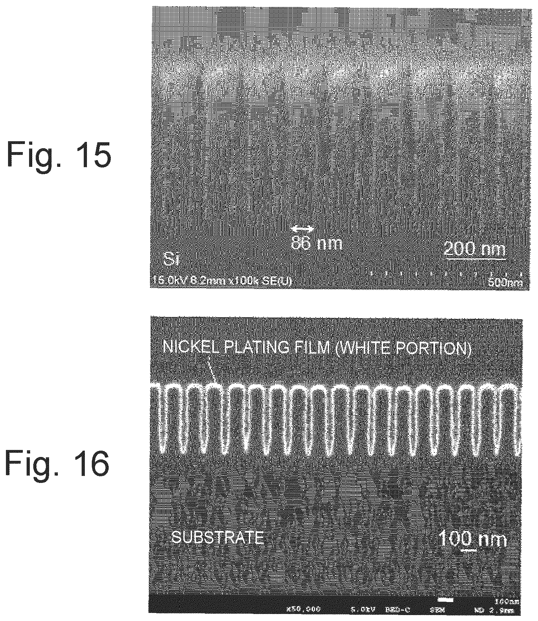

The same sheet as the sheet used in Example 1 was used. The used mold was obtained by performing microfabrication on a 4-inch silicon wafer. In the convex portion shape where the concave portion was formed on the substrate surface, the average width was 54 nm, the average width of the space was 86 nm (period: 140 nm), the average depth was 586 nm, and a bullet-shaped tip portion that was gradually tapered toward the tip was provided. The bottom surface of the concave portion was flat. Using this mold, the fine concave structure was transferred to the sheet surface using a thermal nanoimprinting method. An SEM image obtained by observing a cross-section of the mold used in Comparative Example 4 from substantially the front is illustrated in Figure 15.

(2) Formation of Conductor by Electroless Nickel Plating Method

Using the same plating liquid as the liquid used in Example 3, electroless plating was performed on the sheet where the fine concave structure was formed. By performing the pretreatment with the same plating liquid used in Example 3 at room temperature (23°C) for 120 seconds and performing water cleaning and drying, a polarizing element test piece was prepared. The shape and the like of the prepared substrate and the polarizing element test piece are collectively illustrated in Table 2. An SEM image of a cross-section of the prepared polarizing element test piece is illustrated in Figure 16.

(3) Evaluation Result

Regarding optical characteristics of the prepared polarizing element test piece, the polarization degree was 99% and the single transmittance was 9.1% as illustrated in Table 2. In Figure 16, a nickel plating film having a thickness of about 17 nm was uniformly formed on the substrate surface. Regarding the occupancy of the conductor in each of the layers of the uneven structure, the occupancy in the top portion layer of the convex portion was about 84%, the occupancy in the intermediate layer was about 24%, and the occupancy in the concave portion bottom surface layer was 12% to 24%. When the result of Comparative Example 4 was compared to the test piece prepared in Example 3, it can be seen that a polarization degree of 99% was achieved in all the results, but the single transmittance in the test piece prepared in Comparative Example 4 was reduced to 1/2 or less. Accordingly, it was able to be verified that the single transmittance of the wire grid polarizing element according to the present invention having a corrugated shape in the cross-section taken along the arrangement direction is improved.

[Table 2]

| | | Comparative Example 2 | Example 4-1 | Example 4-2 | Comparative Example 3 | Example 4-3 | Example 4-4 | Comparative Example 4 |
|---|---|---|---|---|---|---|---|---|
| (1) Substrate | | | | | | | | |
| Uneven Shape of Substrate | - | Triangular-Wave Shape | | | | | | Bullet Shape |
| Period (a) | nm | 140 | 140 | 140 | 140 | 140 | 140 | 140 |
| Depth (b) from Convex Portion Tip Portion to Concave Portion Valley Portion | nm | 364 | 358 | 370 | 370 | 373 | 350 | 586 |
| (2) Conductor and Shape Thereof | | | | | | | | |
| Means for Forming Conductor | - | Sputtering | | | | | | Electroless Plating |
| Material of Conductor | - | Aluminum | | | Aluminum/$SiO_2$ | | | Nickel |
| Thicknesses and Widths of Conductor Layers and the like on Substrate | | | | | | | | |

(continued)

| (2) Conductor and Shape Thereof | | | | | | | | |
|---|---|---|---|---|---|---|---|---|
| (i) Average Thickness (f) of Silicon Oxide | nm | - | - | - | 10 | 10 | 10 | - |
| (ii) Average Width (d) in Arrangement Direction of Conductor Layers | nm | 11 | 16 | 21 | 11 | 13 | 17 | 17 |
| (2-1) Conductor Protrusion Portion | | | | | | | | |
| Average Thickness (h) of Conductor Protrusion Portion | nm | 41 | 50 | 72 | 37 | 54 | 70 | |
| [h/d] | - | 3.72 | 3.13 | 3.42 | 3.36 | 4.15 | 4.12 | - |
| (2-2) Average Occupancy of Conductor Layers | | | | | | | | |
| Average Occupancy [(2d/a) × 100] | % | 15.7 | 22.9 | 30.0 | 15.7 | 18.6 | 24.3 | 24.3 |
| (3) Optical Characteristics | | | | | | | | |
| Polarization Degree | % | 89 | 99 | 99 | 89 | 99 | 99 | 99 |
| Single Transmittance | % | 45 | 34 | 29 | 41 | 31 | 23 | 9.1 |

(Reference Example 1)

(1) Summary

Optical characteristics were evaluated using numerical calculation by rigorous coupled-wave analysis assuming the polarizing elements of the geometric models illustrated in Figures 12(1) to 12(3) obtained by forming the uneven shape having a corrugated shape in the cross-section taken along the arrangement direction on the sheet surface with a thermal nanoimprinting method using a mold and subsequently uniformly forming a nickel layer on the surface including the uneven portion with an electroless plating method as in Example 1.

In a case where the displacement (s) of the shape of the conductor is set as a parameter, when the cross-section illustrated in Figure 12(1) is a rectangular shape as the uneven shape, the displacement (s) is 0 nm, as the displacement (s) increases, the cross-section illustrated in Figure 12(2) has a trapezoidal shape as the uneven shape, and as the displacement (s) further increases, the cross-section illustrated in Figure 12(3) has a triangular-wave shape as the uneven shape, and the displacement (s) was 70 nm. When the numerical calculation by rigorous coupled-wave analysis was performed with reference to the geometric models illustrated in Figures 12(1) to 12(3), it was able to be verified that, as the displacement (s) increases, the single transmittance is improved as described below.

(2) Numerical Calculation of Optical Characteristics with respect to Displacement (s) when Average Thickness (c) of Conductor Layer is set as Parameter

The numerical calculation was performed based on the geometric models of Figures 12(1) to 12(3) using DiffractMOD manufactured by Nihon Synopsys G.K. (the former Rsoft). Assuming that substrates 43, 44, and 45 illustrated in Figures 12(1) to 12(3) were polycarbonate, the refractive index was defined as 1.58. As the conductor layer 25, nickel was assumed, and the value disclosed in A. D. Rakic et al., "Optical properties of metallic films for vertical-cavity optoelectronic devices," Appl. Opt. 37, 5271 (1998) was used as the refractive index.

Assuming that the period (a) of the uneven shape was 140 nm and the width (w) and the depth (b) of the concave portion when the displacement (s) was 0 nm were 70 nm and 400 nm, respectively, the polarization degrees and the single transmittances with respect to the displacement (s) when the average thicknesses (c) of the conductor layer were 5 nm, 10 nm, and 15 nm were calculated. **The** rigorous coupled-wave analysis was calculated by applying a refractive index distribution to each of the layers of the calculation model. **In** the inclined structure illustrated in Figure 12(2) or 12(3), layers to which the refractive index distribution was approximately applied were calculated at a certain interval. The interval in this calculation was 1/10 the depth (b) of the corrugated uneven structure.

(3) Calculation Results

(i) When Average Thickness (c) of Conductor Layer was 10 nm

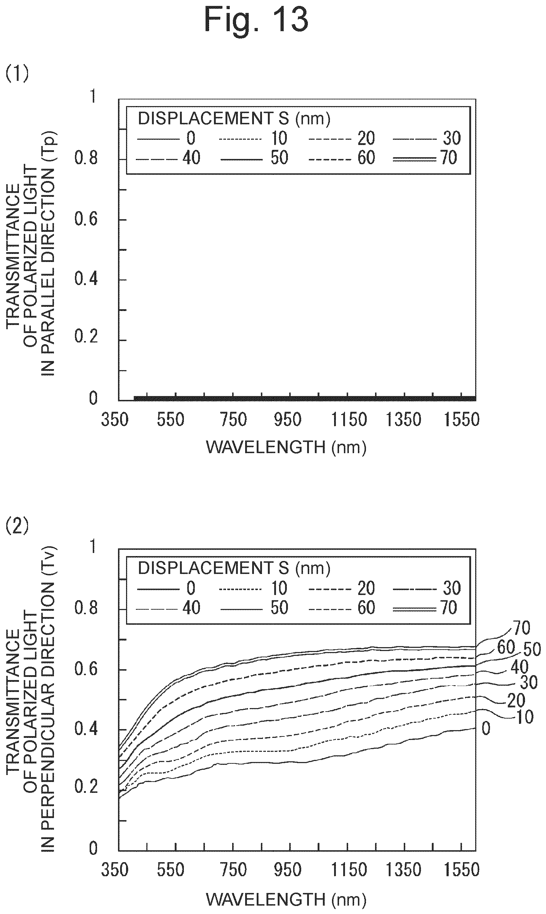

Transmittance spectra obtained by plotting the calculation results of the polarized light transmittance (Tp) in the parallel direction and the polarized light transmittance (Tv) in the perpendicular direction at each of wavelengths are illustrated in Figures 13(1) and 13(2), respectively.

In a case where the displacement (s) is 0 nm, that is, the conductor was uniformly formed in the rectangular shape as the uneven shape, it was able to be verified that, as the displacement (s) increased, the transmittance spectrum of the polarized light transmittance (Tp) in the parallel direction did not substantially change, but the transmittance tended to increase in the transmittance spectrum of the polarized light transmittance (single transmittance, Tv) in the perpendicular direction.

As illustrated in Table 3, when the displacement (s) was 0 nm, the polarization degree was 99% and the single transmittance was 12%. On the other hand, when the displacement (s) was 70 nm, the polarization degree was 99% and the single transmittance was improved to 28%.

(ii) When Average Thickness (c) of Conductor Layer was 5 nm

When the displacement (s) was 0 nm, the polarization degree was 96% and the single transmittance was 24%. On the other hand, when the displacement (s) was 70 nm, the polarization degree was 97% and the single transmittance was improved to 39%.

(iii) When Average Thickness (c) of Conductor Layer was 15 nm

When the displacement (s) was 0 nm, the polarization degree was 99% and the single transmittance was 6%. On the other hand, when the displacement (s) was 70 nm, the polarization degree was 99% and the single transmittance was improved to 19%.

Accordingly, it was verified from the numerical calculation assuming the geometric models illustrated in Figures 12(1) to 12(3) that, when the displacement (s) in the cross-sectional shape was improved from the rectangular shape to the corrugated shape, the single transmittance can be improved in the result, and thus the wire grid polarizing element according to the present invention having a corrugated shape in the cross-section largely contributes to the improvement of the single transmittance as compared to the wire grid polarizing element in the related art having a rectangular shape in cross-section.

[Table 3]

| | | Reference Example 1-1 | Reference Example 1-2 | Reference Example 1-3 | Reference Example 1-4 | Reference Example 1-5 | Reference Example 1-6 |
|---|---|---|---|---|---|---|---|
| (1) Substrate of Corrugated Uneven Shape | | | | | | | |
| Sheet used for Substrate | - | Polycarbonate (Refractive Index: 1.58) | | | | | |
| Period (a) of Uneven Shape | nm | 140 | | | | | |
| Depth (b) of Uneven Shape | nm | 400 | | | | | |
| (2) Polarizing Element | | | | | | | |
| Means for Forming Conductor Layers | - | Assuming Electroless Plating | | | | | |
| Material of Conductor | - | Nickel | | | | | |
| Average Thickness of Conductor Layers | | | | | | | |
| (i) Shape of Polarizing Element Displacement (s) | nm | 0 | 70 | 0 | 70 | 0 | 70 |
| (ii) Average Thickness (c) of Conductor Layers | nm | 5 | | 10 | | 15 | |
| (3) Optical Characteristics | | | | | | | |
| Polarization Degree | % | 96 | 97 | 99 | 99 | 99 | 99 |
| Single Transmittance | % | 24 | 39 | 12 | 28 | 6 | 19 |

(Reference Example 2)

By performing numerical calculation by rigorous coupled-wave analysis using the same geometric model of Figure 12 as the model used in Reference Example 1, a relationship between the depth (b) from the convex portion tip portion to the valley portion of the concave portion in the uneven shape and the optical characteristics was investigated.

(1) Numerical Calculation of Optical Characteristics when Depth (b) from Convex Portion Tip Portion to Valley Portion of Concave Portion in Uneven Shape was Set as Parameter

Numerical calculation was performed based on the geometric model of Figure 12(1) using the same software as the software of Reference Example 1. As the substrate 43 was assumed as polycarbonate, and the refractive index was defined as 1.58. As the conductor layer 25, nickel was assumed, and the value described in A. D. Rakic et al., "Optical properties of metallic films for vertical-cavity optoelectronic devices," Appl. Opt. 37, 5271 (1998) was used as the refractive index. Assuming that the period (a) of the uneven structure was 140 nm, the width (w) of the concave portion was 70 nm when and the displacement (s) was 0 nm, and the average thickness (c) in the direction perpendicular to the surface of the conductor layer 25 was 10 nm, the polarization degrees and the single transmittances when the depths (b) were 200 nm, 300 nm, 400 nm, 600 nm, and 1000 nm were calculated.

(2) Calculation Results

The polarization degree and the single transmittance were calculated from the calculated value. These results are collectively illustrated in Table 4. When the depth (b) was 200 nm, the polarization degree was 96.6%, when the depth (b) was 300 nm, the polarization degree reached 99.4%, and the single transmittance at this time was high at 28%. Based on these results, it was verified from the numerical calculation that, as the depth (b) from the convex portion tip portion to the valley portion of the concave portion in the uneven shape increases, a higher polarization degree can be obtained.

[Table 4]

|  |  | Reference Example 2-1 | Reference Example 2-2 | Reference Example 2-3 | Reference Example 2-4 | Reference Example 2-5 |
|---|---|---|---|---|---|---|
| (1) Substrate of Corrugated Uneven Shape |  |  |  |  |  |  |
| Sheet used for Substrate | - | Polycarbonate (Refractive Index: 1.58) | | | | |
| Period (a) of Uneven Shape | nm | 140 | | | | |
| (2) Polarizing Element |  |  |  |  |  |  |
| (i) Material of Conductor |  | Nickel | | | | |
| (ii) Shapes of Conductor and Substrate |  |  |  |  |  |  |
| Displacement (s) of Shape of Conductor | nm | 0 | 0 | 0 | 0 | 0 |
| Average Thickness (c) of Conductor Layer | nm | 10 | 10 | 10 | 10 | 10 |
| Depth (b) of Uneven Shape | nm | 200 | 300 | 400 | 600 | 1000 |
| Average Width (w) of Concave Portion | nm | 70 | 70 | 70 | 70 | 70 |
| (3) Evaluation Result of Optical Characteristics |  |  |  |  |  |  |
| Polarization Degree | % | 96.6 | 99.4 | 99.9 | 99.99 | 99.9999 |
| Single Transmittance | % | 27 | 28 | 28 | 25 | 20 |

(Reference Example 3)

In the geometric models illustrated in Figures 14(1) to 14(3) assuming the polarizing elements obtained by forming the uneven shape having a corrugated shape in the cross-section taken along the arrangement direction on the sheet surface with a thermal nanoimprinting method using a mold and subsequently performing a deposition method or a sputtering method as in Example 1, when the average width (d) in the arrangement direction of the conductor layers 25 was set as 5 or 10 nm and the average thickness (h) of conductor protrusion portion 26 was represented by the ratio (h/d) of the average thickness (h) to the average width (d) in the arrangement direction of the conductor layers 25, numerical calculation by rigorous coupled-wave analysis was performed.

In a case where the ratio (h/d) between the average thickness (h) in the tip direction of the conductor protrusion portion and the average width (d) in the arrangement direction of the conductor layers was set as a parameter, the calculation was performed in the cross-sectional shape illustrated in Figure 14(1) when (h/d) was 1, the calculation was performed in the cross-sectional shape illustrated in Figure 14(2) when (h/d) was 3, and the calculation was performed in the cross-sectional shape illustrated in Figure 14(3) when (h/d) was 5.

(1) Numerical Calculation of Optical Characteristics when Ratio (h/d) between Average Thickness (h) and Average width (d) in Arrangement direction of Conductor Layers was Set as Parameter

The numerical calculation was performed based on the geometric models of Figures 14(1) to 14(3) using DiffractMOD manufactured by Nihon Synopsys G.K. (the former Rsoft). When the substrate 21 was assumed as polycarbonate, the refractive index was defined as 1.58. As the conductor layer 25, nickel and aluminum were assumed, and the respective values described in A. D. Rakic et al., "Optical properties of metallic films for vertical-cavity optoelectronic devices," Appl. Opt. 37, 5271 (1998) was used as the refractive indices. Assuming that the period (a) of the corrugated uneven shape is 140 nm and the depth (b) of the uneven shape is 400 nm, in the case of nickel, the polarization degree and the single transmittance were calculated when the average width (d) of the conductor layers was 5 nm or 10 nm, and in the case of aluminum, the polarization degree and the single transmittance were calculated when the average width (d) of the conductor layers was 5 nm. The rigorous coupled-wave analysis was calculated by applying a refractive index distribution to each of the layers of the calculation model. In the inclined structure illustrated in Figure 14(1) to 14(3), layers to which the refractive index distribution was approximately applied were calculated at a certain interval. The interval in this calculation was 1/10 the depth (b) of the corrugated uneven structure.

(2) Calculation Results

The calculation results are collectively illustrated in Table 5. In Reference Example 3-1, the polarization degree and the single transmittance calculated when the average width (d) of the conductor layers 25 of nickel was 5 nm are illustrated. In Reference Example 3-2, the polarization degree and the single transmittance calculated when the average width (d) of the conductor layers 25 of nickel was 10 nm are illustrated. In Reference Example 3-3, the polarization degree and the single transmittance calculated when the average width (d) of the conductor layers 25 of aluminum was 5 nm are illustrated. It was verified from Table 5 that, as the ratio (h/d) between the average thickness (h) in the tip direction of the conductor protrusion portion and the average width (d) in the arrangement direction of the conductor layers increases to 2, 3, 5, and 10, the polarization degree is improved while maintaining a high single transmittance, as compared to when h/d is 1. For example, in a case where the average width (d) of the conductor layers of nickel was 10 nm, when h/d was 1, the polarization degree was 99.6%. On the other hand, when h/d was 10, the polarization degree reached 99.9%. It was verified from numerical calculation that, by using the structure according to the present invention having a high polarization degree, the polarization degree can be improved while maintaining a high transmittance.

[Table 5]

| | | Reference Example 3-1 | | | | | Reference Example 3-2 | | | | | Reference Example 3-3 | | | | |
|---|---|---|---|---|---|---|---|---|---|---|---|---|---|---|---|---|
| (1) Substrate of Corrugated Uneven Shape | | | | | | | | | | | | | | | | |
| Sheet used for Substrate | | Polycarbonate (Refractive Index: 1.58) | | | | | | | | | | | | | | |
| Period (a) of Uneven Shape | nm | 140 | | | | | | | | | | | | | | |
| Depth (b) of Uneven Shape | nm | 400 | | | | | | | | | | | | | | |
| (2) Polarizing Element | | | | | | | | | | | | | | | | |
| Means for Forming Conductor Layers | - | Assuming Deposition Method or Sputtering Method | | | | | | | | | | | | | | |
| (i) Material of Conductor | - | Nickel | | | | | | | | | | Aluminum | | | | |
| (ii) Shape of Conductor | | | | | | | | | | | | | | | | |
| Average Width (d) of Conductor Layers | nm | 5 | | | | | 10 | | | | | 5 | | | | |
| Average Thickness (h) of Conductor Protrusion Portion | nm | | | | | | | | | | | | | | | |
| [h/d] | - | 1 | 2 | 3 | 5 | 10 | 1 | 2 | 3 | 5 | 10 | 1 | 2 | 3 | 5 | 10 |
| Reference Drawing | | Figure 14(1) | | Figure 14(2) | Figure 14(3) | | Figure 14(1) | | Figure 14(2) | Figure 14(3) | | Figure 14(1) | | Figure 14(2) | Figure 14(3) | |

(continued)

| (3) Evaluation Result of Optical Characteristics | | | | | | | | | | | | | | | | |
|---|---|---|---|---|---|---|---|---|---|---|---|---|---|---|---|---|
| Polarization Degree | % | 94.56 | 94.82 | 95.07 | 95.54 | 96.53 | 99.61 | 99.67 | 99.73 | 99.81 | 99.93 | 99.81 | 99.83 | 99.84 | 99.87 | 99.92 |
| Single Transmittance | % | 41.9 | 41.8 | 41.7 | 41.5 | 41.0 | 30.6 | 30.6 | 30.5 | 30.3 | 29.8 | 38.3 | 38.3 | 38.3 | 38.3 | 38.2 |

## EP 4 579 291 A1

**Industrial Applicability**

The wire grid polarizing element according to the present invention can be applied to the field of optical products such as a display, a camera, sunglasses, or an optical measuring instrument using an electromagnetic wave such as visible light or near infrared light.

The entire contents of the specification, the claims, the drawings, and the abstract of Japanese Patent Application No. 2022-135199 filed on August 26, 2022 are incorporated herein by reference as the disclosure of the present invention.

**Reference Signs List**

11: wire grid polarizing element
21: substrate
22: convex portion tip portion
23: concave portion
24: substrate surface portion
25: conductor layer
26: conductor protrusion portion
27: underlayer
28: coating layer
31: mold
32: convex portion of mold
33: concave portion of mold
41: substrate
42: substrate
43: substrate
44: substrate
45: substrate

**Claims**

1. A wire grid polarizing element comprising:

    a substrate where an uneven pattern having periodicity is formed on a transparent sheet surface and a cross-sectional shape of the uneven pattern taken along an arrangement direction of the uneven pattern is a continuous corrugated shape; and
    a conductor layer that is disposed on the surface of the substrate and covers a conductor protrusion portion and a surface portion excluding each of convex portion tip portions, the conductor protrusion portion being formed to further protrude from the convex portion tip portion in a tip direction, and the convex portion tip portion being formed to extend in a longitudinal direction in the uneven pattern,
    wherein a period (a) of the uneven pattern of the substrate surface is 100 to 400 nm,
    an average depth (b) from the convex portion tip portion to a valley portion of a concave portion in the uneven pattern of the substrate surface is 200 to 600 nm,
    an average occupancy ($[2d/a] \times 100$) of the conductor layers represented by a ratio of an average width (d) in the arrangement direction of two conductor layers present in one period to the period (a) is 18 to 40%, and
    an average thickness (h) in the tip direction of the conductor protrusion portion provided in the convex portion tip portion of the uneven pattern is 1.5 times or more the average width (d) in the arrangement direction of the conductor layers.

2. The wire grid polarizing element according to Claim 1,
   wherein the average thickness (h) in the tip direction of the conductor protrusion portion provided in the convex portion tip portion of the uneven pattern of the substrate surface is 1.5 times or more and 5 times or less the average width (d) in the arrangement direction of the conductor layers.

3. The wire grid polarizing element according to Claim 1,
   wherein the average width (d) in the arrangement direction of the conductor layers that are disposed on the surface

24

portion excluding the convex portion tip portion in the uneven pattern of the substrate surface is 14 to 70 nm.

4. The wire grid polarizing element according to Claim 1,
wherein the continuous corrugated shape in the cross-sectional shape taken along the arrangement direction that is formed on the substrate surface is a triangular-wave shape made of a continuous shape of a substantially isosceles triangle.

5. The wire grid polarizing element according to Claim 1,
wherein the cross-sectional shape in the arrangement direction of the conductor protrusion portion that is provided on the convex portion tip portion of the uneven pattern of the substrate surface and protrudes in the tip direction is a substantially rectangular shape, a tapered shape, a reverse tapered shape, or a substantially vertical elliptical shape.

6. The wire grid polarizing element according to Claim 1,
wherein a conductor material for forming the conductor protrusion portion and the conductor layer is one or two or more kinds selected from aluminum, gold, silver, copper, platinum, molybdenum, nickel, chromium, titanium, tungsten, tantalum, zirconium, iron, niobium, hafnium, cobalt, palladium, bismuth, and neodymium, or an alloy made of two or more kinds of these metals.

7. A method for producing a wire grid polarizing element comprising:

forming a conductor layer on a surface of a substrate where an uneven pattern having periodicity is formed on a transparent sheet surface and a cross-sectional shape of the uneven pattern taken along an arrangement direction of the uneven pattern is a continuous corrugated shape,
the conductor layer covering a conductor protrusion portion and a surface portion excluding each of convex portion tip portions, the conductor protrusion portion being formed to further protrude from the convex portion tip portion in a tip direction, and the convex portion tip portion being formed to extend in a longitudinal direction in the uneven pattern,
wherein a period (a) of the uneven pattern of the substrate surface is 100 to 400 nm, and an average depth (b) from the convex portion tip portion to a valley portion of a concave portion in the uneven pattern of the substrate surface is 200 to 600 nm,
the conductor layer and the conductor protrusion portion are formed on the substrate surface with a physical deposition method of introducing a deposition material from above in a direction perpendicular to the substrate surface or with an electroless plating method of performing catalyst addition and activation using a liquid containing tin ions ($Sn^{2+}$) and a liquid containing palladium ions ($Pd^{2+}$) as a pretreatment and subsequently performing electroless plating,
an average occupancy ($[2d/a] \times 100$) of the conductor layers represented by a ratio of an average width (d) in the arrangement direction of two conductor layers present in one period to the period (a) is 18 to 40%, and
an average thickness (h) in the tip direction of the conductor protrusion portion provided in the convex portion tip portion of the uneven pattern is 1.5 times or more the average width (d) in the arrangement direction of the conductor layers.

8. The method for producing a wire grid polarizing element according to Claim 7,
wherein the physical deposition method is any one of a vacuum deposition method, an electron beam deposition method, or a sputtering method.

# Fig. 1

(1)

(2)

(3)

# Fig. 2

(1)

(2)

B-B

(3)

C-C

(4)

D-D

# Fig. 3

# Fig. 4

# Fig. 5

# Fig. 6

# Fig. 7

(1)

(2)

(3)

(4)

Fig. 8

Fig. 9

Fig. 10

# Fig. 11

# Fig. 12

(1)

h/d=1

(2)

h/d=3

(3)

h/d=5

# Fig. 13

(1)

(2)

# Fig. 14

(1)

(2)

(3)

Fig. 15

Fig. 16

## INTERNATIONAL SEARCH REPORT

| International application No. |
|---|
| **PCT/JP2023/026757** |

| A. | CLASSIFICATION OF SUBJECT MATTER |
|---|---|

*G02B 5/30*(2006.01)i
FI:   G02B5/30

According to International Patent Classification (IPC) or to both national classification and IPC

| B. | FIELDS SEARCHED |
|---|---|

Minimum documentation searched (classification system followed by classification symbols)

G02B5/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2011/043439 A1 (ASAHI GLASS CO LTD) 14 April 2011 (2011-04-14)<br>claims 1-12, paragraphs [0021], [0028], [0045]-[0048], [0076]-[0092], fig. 3 | 1-8 |
| X | WO 2006/064693 A1 (TORAY INDUSTRIES) 22 June 2006 (2006-06-22)<br>claims 1-4, paragraphs [0024], [0034]-[0037], [0061], fig. 2, 4(b) | 1-8 |
| Y | | 7 |
| X | JP 2008-181112 A (TORAY INDUSTRIES) 07 August 2008 (2008-08-07)<br>claims 1-17, paragraphs [0022], [0029]-[0050], [0091], [0102]-[0106], [0150]-[0153],<br>[0200], fig. 2(b), 2(d), 4, 8(h) | 1-8 |
| Y | | 7 |
| Y | JP 2001-323383 A (OKUNO CHEM IND CO LTD) 22 November 2001 (2001-11-22)<br>paragraphs [0003]-[0008], [0011]-[0016], [0030], [0036]-[0039] | 7 |
| A | JP 2008-083656 A (ASAHI KASEI CORP) 10 April 2008 (2008-04-10)<br>entire text, all drawings | 1-8 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 August 2023** | **05 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
|---|
| **PCT/JP2023/026757** |

| C. | DOCUMENTS CONSIDERED TO BE RELEVANT | |
|---|---|---|
| Category* | Citation of document, with indication, where appropriate, of the relevant passages | Relevant to claim No. |
| A | JP 2018-055004 A (DAINIPPON PRINTING CO LTD) 05 April 2018 (2018-04-05) entire text, all drawings | 1-8 |
| A | US 2016/0124133 A1 (SAMSUNG DISPLAY CO., LTD.) 05 May 2016 (2016-05-05) entire text, all drawings | 1-8 |

Form PCT/ISA/210 (second sheet) (January 2015)

## INTERNATIONAL SEARCH REPORT
### Information on patent family members

| International application No. |
| --- |
| **PCT/JP2023/026757** |

| Patent document<br>cited in search report | | | Publication date<br>(day/month/year) | Patent family member(s) | | | Publication date<br>(day/month/year) |
| --- | --- | --- | --- | --- | --- | --- | --- |
| WO | 2011/043439 | A1 | 14 April 2011 | US | 2012/0236410 | A1 | |
| | | | | claims 1-12, paragraphs<br>[0051], [0067], [0100]-[0113],<br>[0182]-[0200], fig. 3 | | | |
| | | | | CN | 102713697 | A | |
| | | | | TW | 201124758 | A | |
| | | | | KR | 10-2012-0085252 | A | |
| WO | 2006/064693 | A1 | 22 June 2006 | US | 2008/0129931 | A1 | |
| | | | | claims 1-4, paragraphs [0058],<br>[0068]-[0070], [0099], fig. 2,<br>4(b) | | | |
| | | | | EP | 1840603 | A1 | |
| | | | | CN | 101080656 | A | |
| | | | | KR | 10-2007-0095878 | A | |
| | | | | TW | 200641409 | A | |
| JP | 2008-181112 | A | 07 August 2008 | (Family: none) | | | |
| JP | 2001-323383 | A | 22 November 2001 | (Family: none) | | | |
| JP | 2008-083656 | A | 10 April 2008 | US | 2007/0087549 | A1 | |
| | | | | entire text, all drawings | | | |
| | | | | EP | 1775607 | A1 | |
| | | | | EP | 2090909 | A1 | |
| | | | | KR | 10-2007-0042079 | A | |
| | | | | KR | 10-2008-0101833 | A | |
| | | | | CN | 1952700 | A | |
| | | | | TW | 200728786 | A | |
| JP | 2018-055004 | A | 05 April 2018 | (Family: none) | | | |
| US | 2016/0124133 | A1 | 05 May 2016 | US | 2019/0162891 | A1 | |
| | | | | US | 2021/0373220 | A1 | |
| | | | | US | 2021/0373221 | A1 | |
| | | | | KR | 10-2016-0052937 | A | |
| | | | | KR | 10-2021-0110785 | A | |
| | | | | CN | 105572778 | A | |
| | | | | CN | 110989065 | A | |
| | | | | CN | 114296172 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5459210 B
- JP 2009204894 A
- JP 6042642 B
- JP 4650931 B
- JP 2022135199 A

**Non-patent literature cited in the description**

- Low-reflective wire grid polarizers with an absorptive layer formed by glancing angle deposition. *Journal of Institute of Image Information and Television Engineers*, 2011, vol. 65 (10), 1440-1445
- **A. D. RAKIC et al.** Optical properties of metallic films for vertical-cavity optoelectronic devices. *Appl. Opt.*, 1998, vol. 37, 5271